# EUROPEAN PATENT SPECIFICATION

(11) **EP 3 882 084 B1**
(45) Date of publication and mention of the grant of the patent: **22.10.2025**
(21) Application number: 19893857.3
(22) Date of filing: 04.12.2019
(51) Int. Cl.: B60R 11/00, G01M 17/007, G01S 7/40

(54) **DISPLACEMENT APPARATUS AND VEHICLE MARKING DEVICE**
VERSCHIEBEVORRICHTUNG UND FAHRZEUGMARKIERUNGSVORRICHTUNG
APPAREIL DE DÉPLACEMENT ET DISPOSITIF DE MARQUAGE DE VÉHICULE

(30) Priority: 06.12.2018 CN 201811488789
(43) Date of publication of application: 22.09.2021
(73) Proprietor: AUTEL INTELLIGENT TECHNOLOGY CORP., LTD., Shenzhen, Guangdong 518055 (CN)
(72) Inventor: LAI, Biwang, Shenzhen, Guangdong 518055 (CN)
(74) Representative: Harris, Oliver John Richard
(86) International application number: PCT/CN2019/123053
(87) International publication number: WO 2020/114427

(56) References cited:
- EP-A1- 1 310 689
- WO-A2-2006/036889
- CN-A- 106 646 431
- CN-A- 108 345 321
- CN-A- 108 581 982
- CN-A- 108 710 120
- CN-U- 209 521 630
- DE-U1- 212020 000 374
- KR-A- 20130 113 102
- US-A1- 2015 266 116

## Description

### BACKGROUND

### Technical Field

The present application relates to the technical field of device calibration, and in particular, to a displacing apparatus and an automobile calibration device including the displacing apparatus.

### Related Art

At present, a driver assistance system for a vehicle can be used to provide assistance for travelling of the vehicle to achieve intelligent travelling of the vehicle. The driver assistance system of the vehicle may include various sensors such as a radar or a camera to sense surroundings around the vehicle. Surroundings sensing accuracy of the sensors depends on positions of the sensors such as the radar and or camera on the vehicle. Therefore, it is necessary to calibrate or correct a position of the driver assistance system on the vehicle. The above sensors may be calibrated by using a calibration apparatus herein. The calibration apparatus includes a calibration stand configured to carry calibration members for calibrating the sensors. For example, during calibration of the radar, it is necessary to carry the radar calibration member such as a triangular reflector, a pattern reflecting plate, or the like. Current universal calibration apparatuses in the market may be applied to a variety of vehicles. Since the sensor is not always mounted at the same position on various vehicles, a guide rail is disposed on the calibration stand to carry the calibration members at different positions on the guide rail, thereby calibrating the sensor hung on different vehicles. Generally, a displacing apparatus is mounted to the calibration stand. The displacing apparatus is configured to carry the calibration member at different positions on the guide rail.

However, in the prior art, the displacing apparatus mostly includes a guide rail slider and a T-shaped groove for displacement. During implementation of the present application, the inventor finds that: it is inconvenient to install the guide rail slider with the T-shaped groove due to high requirement for installation surface, high cost, and the heavy weight; also, the T-shaped groove may only afford a light load, and would cause excessive friction and unsmooth displacement.

Conventional displacing apparatus are disclosed in EP 1310689A1 and WO 2006036889 A2.

### SUMMARY

Embodiments of the present application provide a displacing apparatus and an automobile calibration device to resolve the technical problems in the prior art that the displacing apparatus is unaffordable to a heavy load, inconveniently installation and high cost.

To resolve the foregoing technical problem, the embodiments of this application provide the following technical solutions:
According to one aspect, an embodiment of the present application provides a displacing apparatus.

The displacing apparatus includes a guide rail and a displacing assembly.

A first guide groove and a second guide groove are formed on a pair of opposite surfaces of the guide rail.

The displacing assembly includes a first rolling mechanism, a second rolling mechanism and a connecting portion, wherein the first rolling mechanism and the second rolling mechanism are mounted to the connecting portion. The connecting portion is configured to carry a calibration member.

The first rolling mechanism is rollably mated with the first guide groove, and the second rolling mechanism is rollably mated with the second guide groove. The first rolling mechanism and the second rolling mechanism are jointly clamped on the guide rail and are rollable relative to the guide rail.

The displacing apparatus further includes a locking member, so that the locking member locks the displacing assembly on the guide rail; wherein the locking member including a locking bolt, the locking bolt being mated with a thread of the displacing assembly, so that the locking bolt abuts against the guide rail or is release from the guide rail.

Optionally, the first rolling mechanism includes a first mounting plate and at least one first wheel. The first wheel is mounted to the first mounting plate and is rollably mated with the first guide groove. The first mounting plate is mounted to the connecting portion.

Optionally, the second rolling mechanism includes a second mounting plate and at least one second wheel. The second wheel is mounted to the second mounting plate and is rollably mated with the second guide groove. The second mounting plate is mounted to the connecting portion.

Optionally, the first rolling mechanism is provided with a first protective wall, wherein the first protective wall is fixedly connected to the first mounting plate. The first wheel is located between the first guide groove and the first protective wall; and/or
the second rolling mechanism is provided with a second protective wall, wherein the second protective wall is fixedly connected to the second mounting plate. The second wheel is located between the second guide groove and the second protective wall.

Optionally, the first guide groove and the second guide groove are recessed from two opposite surfaces of the guide rail.

Optionally, the first guide groove and the second guide groove extend along a straight line and are parallel to each other.

Optionally, the first guide groove and/or the second guide groove are/is V-shaped groove(s).

Optionally, each of the V-shaped groove(s) includes a first guide surface and a second guide surface, wherein the first guide surface is mated with the second guide surface to form the V-shaped groove. The first guide surface is perpendicular to the second guide surface.

Optionally, the guide rail is a structure made of an aluminum alloy profile.

Optionally, the connecting portion is provided with a hanging hole; or wherein a hanger is formed by extending from the connecting portion; the hanging hole or the hanger being configured to carry the calibration member for calibrating one or more assistance sensors in an automobile assistance system.

According to claim 1, the displacing apparatus is mounted on a calibration stand and configured to carry the calibration member for calibrating one or more assistance sensors in an automobile assistance system, the calibration stand comprising: a pedestal; a lifting mechanism, the lifting mechanism being fixed on the pedestal; and a fixing plate, the fixing plate being slidable mounted on the lifting mechanism; the displacing apparatus being fixedly mounted on the fixing plate, so that the displacing apparatus is movable along the lifting mechanism with the fixing plate.

In the technical solutions of the present application, the guide rail serves as a base, the first guide groove and the second guide groove are formed on the surface of the base and the first rolling mechanism and the second rolling mechanism are rollably mated with the guide rail to reduce friction between the displacing assembly and the guide rail through rolling, so that the displacing assembly can move more smoothly relative to the guide rail. In addition, the first rolling mechanism and the second rolling mechanism are jointly clamped on the guide rail, so that the displacing assembly can be smoothly assembled to the guide rail, and the first rolling mechanism and the second rolling mechanism restrain each other to avoid overturning, so that the displacing assembly can still move smoothly even under a relatively heavy load and has good stability.

Further, the displacing apparatus of the present application can make full use of the profile structure of the guide rail, so that the displacing assembly can bear a relatively heavy load.

### BRIEF DESCRIPTION OF THE DRAWINGS

To describe the technical solutions in the embodiments of this application more clearly, the accompanying drawings required for describing the embodiments are briefly described hereinafter. Apparently, the accompanying drawings in the following description show merely some embodiments of this application, and a person of ordinary skill in the art may obtain other accompanying drawings according to structures shown in these accompanying drawings without creative efforts.
FIG. 1 is a three-dimensional schematic structural view of a displacing apparatus according to an embodiment of the present application.
FIG. 2 is a cross-sectional view of FIG. 1.
FIG. 3 is a schematic diagram of a guide rail in FIG. 2.
FIG. 4 is a partial schematic structural diagram of FIG. 1.
FIG. 5 is a three-dimensional schematic structural view of a calibration stand according to another embodiment of the present application.

Main reference numerals:

| | | |
|---|---|---|
| Displacing apparatus 100 | Guide rail 10 | First guide groove 11 |
| First guide surface 111 | Second guide surface 112 | Second guide groove 12 |
| Displacing assembly 20 | First rolling mechanism 21 | First mounting plate 211 |
| First wheel 212 | First protective wall 213 | Second rolling mechanism 22 |
| Second mounting plate 221 | Second wheel 222 | Connecting portion 23 |
| Hanging hole 231 | Mounting axis 24 | Locking member 30 |
| Locking bolt 31 | Screw cap 32 | Calibration stand 200 |
| Pedestal 201 | Lifting mechanism 202 | Fixing plate 203 |

The objective implementation, functional features and advantages of this application are further illustrated with reference to the accompanying drawings by using the embodiments.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of the present application without creative efforts shall fall within the protection scope of this application.

Unless otherwise defined, meanings of all technical and scientific terms used in this specification are the same as those usually understood by a person skilled in the art to which this application belongs. If description, for example, "first" and "second" is involved in the embodiments of this application, the description, for example, "first" and "second", is merely intended for a purpose of description, and shall not be understood as an indication or implication of relative importance or implicit indication of a quantity of indicated technical features. Therefore, a feature restricted by "first" or "second" may explicitly indicate or implicitly include at least one of such features. In addition, technical solutions between the embodiments may be combined with each other, provided that the combination of the technical solutions can be implemented by a person of ordinary skill in the art. When the combined technical solutions conflict with each other or cannot be implemented, it should be considered that such a combination of the technical solutions does not exist or is not within the protection scope of this application.

To make a person in the art understand the technical solutions in this application better, the following clearly and completely describes the technical solutions in the embodiments of this application with reference to the accompanying drawings.

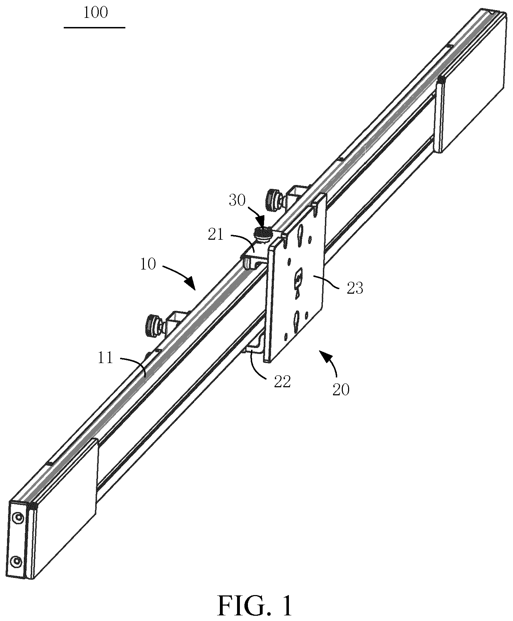

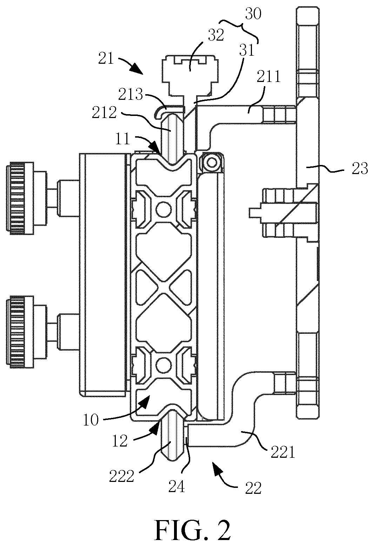

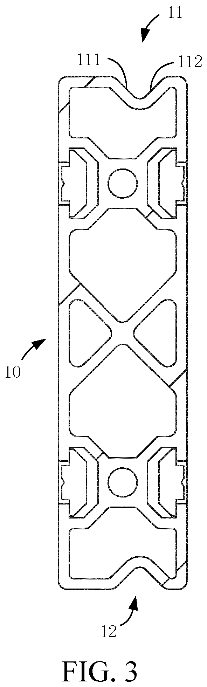

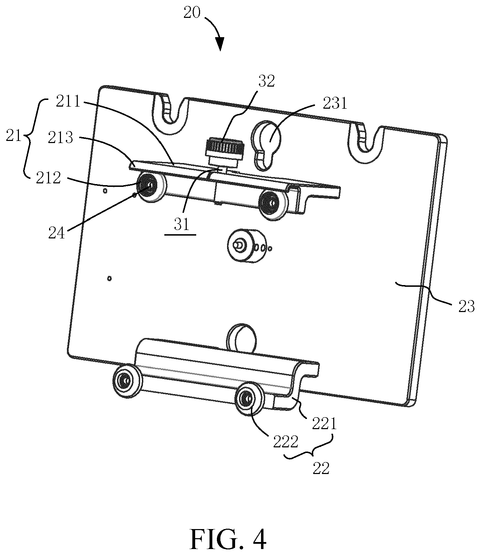

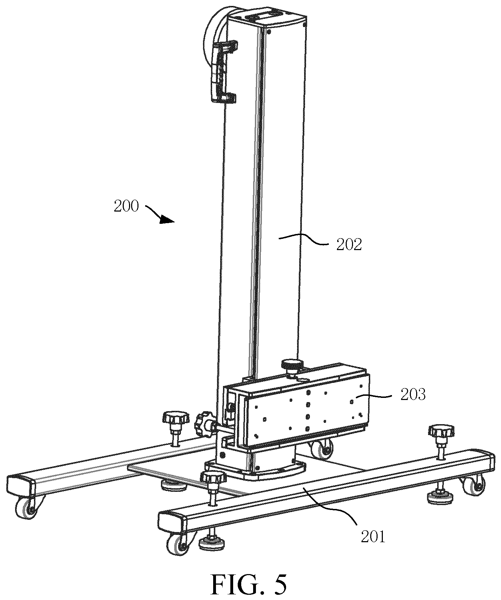

Referring to FIG. 1 to FIG. 5, FIG. 1 is a three-dimensional schematic structural view of a displacing apparatus according to an embodiment of the present application, FIG. 2 is a cross-sectional view of FIG. 1, FIG. 3 is a schematic diagram of a guide rail in FIG. 2, FIG. 4 is a partial schematic structural diagram of FIG. 1 and FIG. 5 is a three-dimensional schematic structural view of a calibration stand according to another embodiment of the present application.

Referring to FIG. 1, an embodiment of the present application provides a displacing apparatus 100 particularly applicable to the technical field of device calibration or correction. The displacing apparatus is mounted to a calibration stand of an automobile and is configured to carry a calibration member for calibrating one or more assistance sensors in the automobile assistance system. The displacing apparatus 100 includes a guide rail 10 and a displacing assembly 20. The displacing assembly 20 includes a first rolling mechanism 21 and a second rolling mechanism 22. The first rolling mechanism 21 is fixedly connected to the second rolling mechanism 22, and the first rolling mechanism 21 and the second rolling mechanism 22 are clamped on the guide rail 10, so that the displacing assembly 20 can move along a direction in which the guide rail 10 extends.

Referring to FIG. 2, a first guide groove 11 and a second guide groove 12 are formed on a surface of the guide rail 10. The first guide groove 11 and the second guide groove 12 are configured to guide the movement of the displacing assembly 20 along a specific direction. In this embodiment, the first guide groove 11 and the second guide groove 12 extend along a straight line to guide the displacing assembly 20 to move along the straight line. Further, the first guide groove 11 and the second guide groove 12 are parallel to each other.

In some embodiments, the first guide groove 11 and the second guide groove 12 extend along a curve to guide the displacing assembly 20 to move along the curve. Optionally, the first guide groove 11 and the second guide groove 12 are arranged in a regular curve, such as a circular arc line segment or an elliptical arc line segment. A proper extending path may be designed for the first guide groove 11 and the second guide groove 12 according to specific actual conditions to enhance usability of the displacing apparatus 100.

Referring to FIG. 3, in this embodiment, the first guide groove 11 and the second guide groove 12 are recessed from the guide rail 10 and the first guide groove 11 and the second guide groove 12 are disposed on two surfaces of the guide rail 10 opposite to each other. For example, as shown in FIG. 3, the first guide groove 11 and the second guide groove 12 are respectively located on an upper surface and a lower surface of the guide rail 10. In some other embodiments, the first guide groove 11 and the second guide groove 12 may also be respectively located on front and rear surfaces of the guide rail 10. It may be understood that the first guide groove 11 and the second guide groove 12 may protrude from the surfaces of the guide rail 10, for example, a guide groove wall extends outward from the surface of the guide rail 10 to form a guide groove structure.

In this embodiment, the guide rail 10 adopts a profile structure with a certain shape. Optionally, the guide rail 10 is a structure made of an aluminum alloy profile, which has a light weight, high strength and the like. In order to enable the guide rail 10 to bear the displacing assembly 20 with a heavy weight, the first guide groove 11 and the second guide groove 12 are recessed from two surfaces of the guide rail 10, which simplifies a production process. In addition, since the guide rail 10 is used as a base, the first guide groove 11 and the second guide groove 12 can bear the displacing assembly 20 with a heavy weight.

In some embodiments, the first guide groove 11 and the second guide groove 12 are disposed on two opposite surfaces of the guide rail 10, but not disposed opposite to each other. For example, when the first guide groove 11 and the second guide groove 12 are respectively disposed on an upper surface and a lower surface of the guide rail, the first guide groove and the second guide groove do not need to be located on the same vertical plane or on the same plane parallel to the front surface or the rear surface. The first rolling mechanism 21 and the second rolling mechanism 22 may be clamped on the guide rail 10, so that the displacing assembly 20 can move or be fixed relative to the guide rail 10 stably.

Referring to FIG. 4, in this embodiment, the displacing assembly 20 further includes a connecting portion 23. The first rolling mechanism 21 and the second rolling mechanism 22 are mounted to the connecting portion 23. Optionally, the connecting portion 23 is provided with a hanging hole 231 or a hanging portion (not shown) is formed by extending from the connecting portion 23. The hanging hole 231 or the hanging portion is configured to carry an object, so that the object can move with the displacing assembly 20. Particularly, during the calibration or the correction of the device, the hanging hole 231 or the hanging portion can fixedly carry an assistance device for calibration or correction, such as a calibration member, so that the calibration member may move or be locked along a specific direction, thereby implementing the calibration or the correction of the device.

Referring to FIG. 2 and FIG. 4 together, in this embodiment, the first rolling mechanism 21 is rollably mated with the first guide groove 11. Specifically, the first rolling mechanism 21 includes a first mounting plate 211 and at least one first wheel 212. The first wheel 212 is mounted to the first mounting plate 211 and is rollably mated with the first guide groove 11. The first mounting plate 211 is mounted to the connecting portion 23.

As shown in FIG. 4, the first wheel 212 is rotatably connected to the first mounting plate 211 through a mounting axis 24. One end of the mounting axis 24 is fixedly mounted to the first mounting plate 211, the other end is rotatably mounted to the first wheel 212 and the first wheel 212 can rotate around the mounting axis 24. Optionally, the first rolling mechanism 21 has two first wheels 212 which are arranged side by side along the first guide groove 11.

Further, the first rolling mechanism 21 is provided with a first protective wall 213 (as shown in FIG. 2). The first protective wall 213 is fixedly connected to the first mounting plate 211. The first wheel 212 is located between the first guide groove 11 and the first protective wall 213, so that the first wheel 212 is located in a relatively enclosed space to avoid sundries entering into the enclosed space between the first guide groove 11 and the first wheel 212, and to prevent operators from erroneously inserting fingers into rolling parts, thereby avoiding personal injury.

In this embodiment, the first protective wall 213 is formed by extending from the first mounting plate 211 along the mounting axis 24. The first protective wall 213 and the first mounting plate 211 are integrally formed.

Still referring to FIG. 2 and FIG. 4, in this embodiment, the second rolling mechanism 22 is rollably mated with the second guide groove 12. Specifically, as shown in FIG. 2, the second rolling mechanism 22 includes a second mounting plate 221 and at least one second wheel 222. The second wheel 222 is mounted to the second mounting plate 221 and is rollably mated with the second guide groove 12. The second mounting plate 221 is mounted to the connecting portion 23.

Similarly, the second wheel 222 is rotatably connected to the second mounting plate 221 through the mounting axis 24. One end of the mounting axis 24 is fixedly mounted to the second mounting plate 221, the other end is rotatably mounted to the second wheel 222 and the second wheel 222 rotates about the mounting axis 24. Optionally, the second rolling mechanism 22 has two second wheels 222 which are arranged side by side along the first guide groove 11.

In this embodiment, both the first wheel 212 and the second wheel 222 adopt nylon wheels, which are wear-resisting, silent, light and convenient to mount.

Optionally, the second rolling mechanism 22 is provided with a second protective wall (not shown), the second protective wall being fixedly connected to the second mounting plate 221. The second wheel 222 is located between the second guide groove 12 and the second protective wall, so that the second wheel 222 is located in a relatively closed space to avoid sundries entering into the enclosed between the second guide groove 12 and the second wheel 222, and to prevent the operators from erroneously inserting fingers into rolling parts, thereby avoiding personal injury.

In this embodiment, the connecting portion 23 is detachably connected to the first rolling mechanism 21 and the second rolling mechanism 22 respectively. The first rolling mechanism 21 and the second rolling mechanism 22 are moved along the first guide groove 11 and the second guide groove 12, which are recessed from the guide rail 10, to be respectively installed into the first guide groove 11 and the second guide groove 12. Therefore, the installation and the use is facilitated and simplified. In addition, the connecting portion 23 is provided with the hanging hole 231 or the hanging portion, so as to enhance a carrying capacity of the displacing assembly 20 to improve the usability of the displacing apparatus 100.

Still referring to FIG. 2 and FIG. 3, particularly, the first guide groove 11 and the second guide groove 12 are V-shaped grooves. Each of the V-shaped grooves includes a first guide surface 111 and a second guide surface 112. The first guide surface 111 is mated with the second guide surface 112 to form the V-shaped groove. The first guide surface 111 is at a certain angle to the second guide surface 112 to accommodate the first wheel 212 or the second wheel 222, and the first wheel 212or the second wheel 222 can be attached to the first guide surface 111 and the second guide surface 112.

In this embodiment, the first guide groove 11 and the second guide groove 12 are V-shaped grooves. On the one hand, each of the V-shaped grooves has a function of movement guiding. On the other hand, the first guide surface 111 and the second guide surface 112 on both sides of each of the V-shaped grooves can bear the first wheel 212 or the second wheel 222 to roll along. When the displacing assembly 20 tends to tilt relative to the guide rail 10, the first guide surface 111 and the second guide surface 112 are in surface contact with the first wheel 212 or the second wheel 222, thereby enhancing the stability between the displacing assembly 20 and the guide rail 10 and preventing the displacing assembly 20 from overturning during use. Optionally, the first guide surface 111 and the second guide surface 112 are perpendicular to each other.

Further, in this embodiment, as shown in FIG. 2, the displacing apparatus 100 further includes a locking member 30. The locking member 30 is configured to maintain the displacing assembly 20 and the guide rail 10 relatively fixed or movable. Optionally, the locking member 30 includes a locking bolt 31. The locking bolt 31 is mated with a thread of the displacing assembly 20, so that the locking bolt 31 can abut tightly against or be released from the guide rail 10, thereby maintaining the displacing assembly 20 and the guide rail 10 relatively fixed or movable. Specifically, the locking bolt 31 is mated with a thread of the first protective wall 213. By screwing the locking bolt 31, one end surface of the locking bolt 31 abuts tightly against one end surface of the guide rail 10, thereby maintaining the displacing assembly 20 and the guide rail 10 relatively fixed. It may be understood that when the locking bolt 31 is unscrewed, the locking bolt 31 is released from the guide rail 10, so that the displacing assembly 20 can be driven to move relative to the guide rail 10.

Further, the locking member 30 further includes a screw cap 32. The screw cap 32 is fixed to one end of the locking bolt 31 to facilitate the locking bolt 31 to screw in or screw out of the thread. Optionally, the screw cap 32 and the locking bolt 31 are integrally formed to improve production efficiency.

In this embodiment, the first wheel 212 is rollably mated with the first guide groove 11 and the second wheel 222 is rollably mated with the second guide groove 12, therefore, the friction between the displacing assembly 20 and the guide rail 10 may be effectively reduced, and convenient movement and less part wear may be achieved. In addition, the first wheel 212 and the second wheel 222 may be clamped on the guide rail 10 to ensure movement stability and stillness stability. To facilitate assembly and use, in this embodiment, the first wheel 212 is detachably mounted to the connecting portion 23 through the first mounting plate 211 and the second wheel 222 is detachably mounted to the connecting portion 23 through the second mounting plate 221. It may be understood that the second wheel 222 may be fixedly mounted to the connecting portion 23 through the second mounting plate 221.

Referring to FIG. 5, another embodiment according to claim 1, further provides an automobile calibration device, which includes a calibration stand 200 and the displacing apparatus 100 described above. The calibration stand 200 is configured to carry the displacing apparatus 100. The automobile calibration device is used for calibrating instruments and devices during automobile maintenance or calibration.

As shown in FIG. 5, specifically, the calibration stand 200 includes a pedestal 201, a lifting mechanism 202 and a fixing plate 203. The lifting mechanism 202 is fixedly mounted to the pedestal 201 and the fixing plate 203 is slidably mounted to the lifting mechanism 202. The lifting mechanism 202 is configured to drive the fixing plate 203 to move upward or downward. Optionally, the lifting mechanism 202 includes a lift actuator mechanism, a mechanism having a motor and transmission belt, or the like. The guide rail 10 of the displacing apparatus 100 is fixedly mounted to the fixing plate 203 and can move upward or downward driven by the fixing plate 203.

Further, the base 201 has a horizontal adjustment mechanism. The horizontal adjustment mechanism is configured to adjust levelness of the lifting mechanism 202, thereby adjusting horizontal of the guide rail 10.

The present application provides an operation method based on the automobile calibration device. Calibration for a radar mounted to an automobile is exemplified for reference.

Still referring to FIG. 1 to FIG. 5, the calibration stand 200 is moved to the front of the automobile to be calibrated, and the guide rail 10 of the displacing apparatus 100 is fixedly mounted to the fixing plate 203.

The levelness of the guide rail 10 is adjusted through the horizontal adjustment mechanism on the pedestal 201 to position the guide rail horizontally.

The height of the guide rail 10 is adjusted by the lifting mechanism 202 such that the guide rail is positioned at a certain height.

A radar receiver is fixedly carried at the hanging hole 231.

The radar on the automobile to be calibrated is activated, and the displacing assembly 20 is moved so that the radar receiver may receive the signal sent by the radar. The mounting status may be determined by the signal, and therefore, the mounting position and the mounting orientation of the radar may be adjusted.

Based on the above, the displacing apparatus 100 and the automobile calibration device in the technical solutions of the present application include at least but not limited to the following advantages.

In the technical solution of the present application, the guide rail 10 serves as a base, the first guide groove 11 and the second guide groove 12 are formed on the surface of the base and the first rolling mechanism 21 and the second rolling mechanism 22 are rollably mated with the guide rail 10 to reduce the friction between the displacing assembly 20 and the guide rail 10 through rolling, so that the displacing assembly 20 can move more smoothly relative to the guide rail 10. In addition, the first rolling mechanism 21 and the second rolling mechanism 22 are jointly clamped on the guide rail 10 together, so that the displacing assembly 20 can be smoothly assembled to the guide rail 10 and the first rolling mechanism 21 and the second rolling mechanism 22 restrain each other to avoid overturning, so that the displacing assembly 20 can still move smoothly even under a relatively heavy load and has good stability.

Moreover, the displacing apparatus 100 of the present application can make full use of the profile structure of the guide rail 10, so that the displacing assembly 20 can bear a relatively heavy load.

The above examples are preferred implementations of this application. However, the implementation of this application is not limited by the above examples, and any alternation, modification, substitution, combination, and simplification without departing from the spiritual essence and principles of this application should all be equivalent replacements, and all fall within the scope of protection of this application as defined in the appended claims.

## Claims

1. A displacing apparatus (100),
comprising a guide rail (10) and a displacing assembly (20),
a first guide groove (11) and a second guide groove (12) being formed on a pair of opposite surfaces of the guide rail (10),
the displacing assembly (20) comprising a first rolling mechanism (21), a second rolling mechanism (22) and a connecting portion (23), the first rolling mechanism (21) and the second rolling mechanism (22) being mounted to the connecting portion (23), the connecting portion (23) being configured to carry a calibration member,
the first rolling mechanism (21) being rollably mated with the first guide groove (11), the second rolling mechanism (22) being rollably mated with the second guide groove (12) and the first rolling mechanism (21) and the second rolling mechanism (22) being jointly clamped on the guide rail (10) and being rollable relative to the guide rail (10);
wherein the displacing apparatus (100) further comprises a locking member (30), so that the locking member (30) locks the displacing assembly (20) on the guide rail (10);
wherein the locking member (30) comprises a locking bolt (31), the locking bolt (31) being mated with a thread of the displacing assembly (20), so that the locking bolt (31) abuts against the guide rail (10) or is release from the guide rail (10);
**characterized in that**
the displacing apparatus (100) is mounted on a calibration stand (200) and configured to carry the calibration member for calibrating one or more assistance sensors in an automobile assistance system,
the calibration stand (200) comprising:
a pedestal (201);
a lifting mechanism (202), the lifting mechanism (202) being fixed on the pedestal (201); and
a fixing plate (203), the fixing plate (203) being slidable mounted on the lifting mechanism (202);
the displacing apparatus (100) being fixedly mounted on the fixing plate (203), so that the displacing apparatus (100) is movable along the lifting mechanism (202) with the fixing plate (203).

2. The displacing apparatus (100) according to claim 1, wherein the first rolling mechanism (21) comprises a first mounting plate (211) and at least one first wheel (212), the first wheel (212) being mounted to the first mounting plate (211) and being rollably mated with the first guide groove (11) and the first mounting plate (211) being mounted to the connecting portion (23); and
the second rolling mechanism (22) comprises a second mounting plate (221) and at least one second wheel, the second wheel being mounted to the second mounting plate (221) and being rollably mated with the second guide groove (12) and the second mounting plate (221) being mounted to the connecting portion (23).

3. The displacing apparatus (100) according to claim 2, wherein the first rolling mechanism (21) is provided with a first protective wall (213), the first protective wall (213) being fixedly connected to the first mounting plate (211) and the first wheel (212) being located between the first guide groove (11) and the first protective wall (213); and/or
the second rolling mechanism (22) is provided with a second protective wall, the second protective wall being fixedly connected to the second mounting plate (221) and the second wheel being located between the second guide groove (12) and the second protective wall.

4. The displacing apparatus (100) according to any of claims 1 to 3, wherein the first guide groove (11) and the second guide groove (12) are recessed from the pair of opposite surfaces of the guide rail (10).

5. The displacing apparatus (100) according to any of claims 1 to 4, wherein the first guide groove (11) and the second guide groove (12) extend along a straight line and are parallel to each other.

6. The displacing apparatus (100) according to any of claims 1 to 5, wherein the first guide groove (11) and/or the second guide groove (12) are/is V-shaped groove(s).

7. The displacing apparatus (100) according to claim 6, wherein each of the V-shaped groove(s) comprises a first guide surface (111) and a second guide surface (112), the first guide surface (111) being mated with the second guide surface (112) to form the V-shaped groove and the first guide surface (111) being perpendicular to the second guide surface (112).

8. The displacing apparatus (100) according to any of claims 1 to 7, wherein the guide rail (10) is a structure made of an aluminum alloy profile.

9. The displacing apparatus (100) according to claim 1, wherein the connecting portion (23) is provided with a hanging hole (231); or
wherein a hanger is formed by extending from the connecting portion (23);
the hanging hole (231) or the hanger being configured to carry the calibration member for calibrating one or more assistance sensors in an automobile assistance system.

## Patentansprüche

1. Verlagerungsvorrichtung (100),
umfassend eine Führungsschiene (10) und eine Verlagerungsbaugruppe (20),
eine erste Führungsrille (11) und eine zweite Führungsrille (12), die auf einem Paar von gegenüberliegenden Oberflächen der Führungsschiene (10) gebildet sind,
wobei die Verlagerungsbaugruppe (20) einen ersten Rollmechanismus (21), einen zweiten Rollmechanismus (22) und einen Verbindungsabschnitt (23) umfasst, wobei der erste Rollmechanismus (21) und der zweite Rollmechanismus (22) an dem Verbindungsabschnitt (23) montiert sind, wobei der Verbindungsabschnitt (23) dazu konfiguriert ist, ein Kalibrierelement zu tragen,
wobei der erste Rollmechanismus (21) mit der ersten Führungsrille (11) rollfähig gepaart ist, der zweite Rollmechanismus (22) mit der zweiten Führungsrille (12) rollfähig gepaart ist, und der erste Rollmechanismus (21) und der zweite Rollmechanismus (22) zusammen auf der Führungsschiene (10) festgeklemmt sind und im Verhältnis zur Führungsschiene (10) rollfähig sind;
wobei die Verlagerungsvorrichtung (100) ferner ein Verriegelungselement (30) umfasst, so dass das Verriegelungselement (30) die Verlagerungsbaugruppe (20) auf der Führungsschiene (10) verriegelt;
wobei das Verriegelungselement (30) einen Verriegelungsbolzen (31) umfasst, wobei der Verriegelungsbolzen (31) mit einem Gewinde der Verlagerungsbaugruppe (20) gepaart ist, so dass der Verriegelungsbolzen (31) an der Führungsschiene (10) zum Anschlag kommt oder von der Führungsschiene (10) gelöst ist;
**dadurch gekennzeichnet, dass**
die Verlagerungsvorrichtung (100) an einem Kalibrierstand (200) montiert ist und dazu konfiguriert ist, das Kalibrierelement zum Kalibrieren eines oder mehrerer Assistenzsensoren in einem Fahrzeugassistenzsystem zu tragen,
wobei der Kalibrierstand (200) umfasst:
einen Sockel (201);
einen Hebemechanismus (202), wobei der Hebemechanismus (202) an dem Sockel (201) befestigt ist; und
eine Befestigungsplatte (203), wobei die Befestigungsplatte (203) an dem Hebemechanismus (202) gleitend montiert ist;
wobei die Verlagerungsvorrichtung (100) fest an der Befestigungsplatte (203) montiert ist, so dass die Verlagerungsvorrichtung (100) entlang des Hebemechanismus (202) mit der Befestigungsplatte (203) bewegbar ist.

2. Verlagerungsvorrichtung (100) nach Anspruch 1, wobei der erste Rollmechanismus (21) eine erste Montageplatte (211) und mindestens ein erstes Rad (212) umfasst, wobei das erste Rad (212) an der ersten Montageplatte (211) montiert ist und mit der ersten Führungsrille (11) rollfähig gepaart ist, und die erste Montageplatte (211) an dem Verbindungsabschnitt (23) montiert ist; und
der zweite Rollmechanismus (22) eine zweite Montageplatte (221) und mindestens ein zweites Rad umfasst, wobei das zweite Rad an der zweiten Montageplatte (221) montiert ist und mit der zweiten Führungsrille (12) rollfähig gepaart ist, und die zweite Montageplatte (221) an dem Verbindungsabschnitt (23) montiert ist.

3. Verlagerungsvorrichtung (100) nach Anspruch 2, wobei der erste Rollmechanismus (21) mit einer ersten Schutzwand (213) versehen ist, wobei die erste Schutzwand (213) mit der ersten Montageplatte (211) fest verbunden ist, und sich das erste Rad (212) zwischen der ersten Führungsrille (11) und der ersten Schutzwand (213) befindet; und/oder
der zweite Rollmechanismus (22) mit einer zweiten Schutzwand versehen ist, wobei die zweite Schutzwand mit der zweiten Montageplatte (221) fest verbunden ist, und sich das zweite Rad zwischen der zweiten Führungsrille (12) und der zweiten Schutzwand befindet.

4. Verlagerungsvorrichtung (100) nach einem der Ansprüche 1 bis 3, wobei die erste Führungsrille (11) und die zweite Führungsrille (12) gegenüber dem Paar von gegenüberliegenden Oberflächen der Führungsschiene (10) vertieft sind.

5. Verlagerungsvorrichtung (100) nach einem der Ansprüche 1 bis 4, wobei sich die erste Führungsrille (11) und die zweite Führungsrille (12) entlang einer Geraden erstrecken und zueinander parallel sind.

6. Verlagerungsvorrichtung (100) nach einem der Ansprüche 1 bis 5, wobei die erste Führungsrille (11) und/oder die zweite Führungsrille (12) V-förmige Rillen sind.

7. Verlagerungsvorrichtung (100) nach Anspruch 6, wobei jede der V-förmigen Rillen eine erste Führungsfläche (111) und eine zweite Führungsfläche (112) umfasst, wobei die erste Führungsfläche (111) mit der zweiten Führungsfläche (112) gepaart ist, um die V-förmige Rille zu bilden, und die erste Führungsfläche (111) zu der zweiten Führungsfläche (112) rechtwinklig ist.

8. Verlagerungsvorrichtung (100) nach einem der Ansprüche 1 bis 7, wobei die Führungsschiene (10) eine Struktur ist, die aus einem Profil aus Aluminiumlegierung besteht.

9. Verlagerungsvorrichtung (100) nach Anspruch 1, wobei der Verbindungsabschnitt (23) mit einem Aufhängeloch (231) versehen ist; oder
wobei ein Aufhänger gebildet wird, indem er sich von dem Verbindungsabschnitt (23) aus erstreckt;
wobei das Aufhängeloch (231) oder der Aufhänger dazu konfiguriert ist, das Kalibrierelement zu tragen, um einen oder mehrere Assistenzsensoren in einem Fahrzeugassistenzsystem zu kalibrieren.

## Revendications

1. Appareil de déplacement (100),
comprenant un rail de guidage (10) et un ensemble de déplacement (20),
une première rainure de guidage (11) et une seconde rainure de guidage (12) étant formées sur une paire de surfaces opposées du rail de guidage (10),
l'ensemble de déplacement (20) comprenant un premier mécanisme de roulement (21), un second mécanisme de roulement (22) et une partie de raccordement (23), le premier mécanisme de roulement (21) et le second mécanisme de roulement (22) étant montés sur la partie de raccordement (23), la partie de raccordement (23) étant configurée pour porter un élément d'étalonnage,
le premier mécanisme de roulement (21) étant couplé, de manière à pouvoir rouler, avec la première rainure de guidage (11), le second mécanisme de roulement (22) étant couplé, de manière à pouvoir rouler, avec la seconde rainure de guidage (12) et le premier mécanisme de roulement (21) et le second mécanisme de roulement (22) étant conjointement serrés sur le rail de guidage (10) et pouvant rouler par rapport au rail de guidage (10) ;
dans lequel l'appareil de déplacement (100) comprend un élément de verrouillage (30), de sorte que l'élément de verrouillage (30) verrouille l'ensemble de déplacement (20) sur le rail de guidage (10) ;
dans lequel l'élément de verrouillage (30) comprend un boulon de verrouillage (31), le boulon de verrouillage (31) étant couplé avec un filetage de l'ensemble de déplacement (20), de sorte que le boulon de verrouillage (31) vient en butée contre le rail de guidage (10) ou bien est libéré du rail de guidage (10) ;
**caractérisé en ce que** :
l'appareil de déplacement (100) est monté sur un banc d'étalonnage (200) et configuré pour porter l'élément d'étalonnage pour étalonner un ou plusieurs capteurs d'assistance dans un système d'assistance pour automobile,
le banc d'étalonnage (200) comprenant :
un piédestal (201) ;
un mécanisme de levage (202), le mécanisme de levage (202) étant fixé sur le piédestal (201) ; et
une plaque de fixation (203), la plaque de fixation (203) étant montée, de manière coulissante, sur le mécanisme de levage (202) ;
l'appareil de déplacement (100) étant monté, de manière fixe, sur la plaque de fixation (203), de sorte que l'appareil de déplacement (100) est mobile le long du mécanisme de levage (202) avec la plaque de fixation (203).

2. Appareil de déplacement (100) selon la revendication 1, dans lequel le premier mécanisme de roulement (21) comprend une première plaque de montage (211) et au moins une première roue (212), la première roue (212) étant montée sur la première plaque de montage (211) et étant couplée, de manière à pouvoir rouler, avec la première rainure de guidage (11) et la première plaque de montage (211) étant montée sur la partie de raccordement (23) ; et
le second mécanisme de roulement (22) comprend une seconde plaque de montage (221) et au moins une seconde roue, la seconde roue étant montée sur la seconde plaque de montage (221) et étant couplée, de manière à pouvoir rouler, avec la seconde rainure de guidage (12) et la seconde plaque de montage (221) étant montée sur la partie de raccordement (23).

3. Appareil de déplacement (100) selon la revendication 2, dans lequel le premier mécanisme de roulement (21) est prévu avec une première paroi de protection (213), la première paroi de protection (213) étant raccordée, de manière fixe, à la première plaque de montage (211) et la première roue (212) étant positionnée entre la première rainure de guidage (11) et la première paroi de protection (213) ; et/ou
le second mécanisme de roulement (22) est prévu avec une seconde paroi de protection, la seconde paroi de protection étant raccordée, de manière fixe, à la seconde plaque de montage (221) et la seconde roue étant positionnée entre la seconde rainure de guidage (12) et la seconde paroi de protection.

4. Appareil de déplacement (100) selon l'une quelconque des revendications 1 à 3, dans lequel la première rainure de guidage (11) et la seconde rainure de guidage (12) sont enfoncées par rapport à la paire de surfaces opposées du rail de guidage (10).

5. Appareil de déplacement (100) selon l'une quelconque des revendications 1 à 4, dans lequel la première rainure de guidage (11) et la seconde rainure de guidage (12) s'étendent le long d'une ligne droite et sont parallèles entre elles.

6. Appareil de déplacement (100) selon l'une quelconque des revendications 1 à 5, dans lequel la première rainure de guidage (11) et/ou la seconde rainure de guidage (12) est/sont une (des) rainure(s) en forme de V.

7. Appareil de déplacement (100) selon la revendication 6 , dans lequel chacune de la (des) rainure(s) en forme de V comprend une première surface de guidage (111) et une seconde surface de guidage (112), la première surface de guidage (111) étant couplée avec la seconde surface de guidage (112) afin de former la rainure en forme de V et la première surface de guidage (111) étant perpendiculaire à la seconde surface de guidage (112).

8. Appareil de déplacement (100) selon l'une quelconque des revendications 1 à 7, dans lequel le rail de guidage (10) est une structure réalisée avec un profil en alliage d'aluminium.

9. Appareil de déplacement (100) selon la revendication 1, dans lequel la partie de raccordement (23) est prévue avec un trou de suspension (231) ; ou bien
dans lequel un dispositif de suspension est formé en s'étendant à partir de la partie de raccordement (23) ;
le trou de suspension (231) ou le dispositif de suspension étant configuré pour porter l'élément d'étalonnage pour étalonner un ou plusieurs capteurs d'assistance dans un système d'assistance pour automobile.
